# EUROPEAN PATENT APPLICATION

(11) **EP 4 729 442 A1**
(43) Date of publication of application: **22.04.2026**
(21) Application number: 25817398.8
(22) Date of filing: 06.06.2025
(51) Int. Cl.: B65G 1/04, B65G 37/00

(54) **WORKSTATION AND WAREHOUSE SYSTEM**

(30) Priority: 12.08.2024 CN 202421954708 U
(71) Applicant: Hai Robotics Co., Ltd., Shenzhen, Guangdong 518000 (CN)
(72) Inventor: XU, Bo, Shenzhen, Guangdong 518000 (CN)
(74) Representative: Gulde & Partner
(86) International application number: PCT/CN2025/099713
(87) International publication number: WO 2026/036875

(57) **Abstract**

The present disclosure provides a workstation and a warehousing system, and relates to the field of warehousing and logistics technologies. The workstation includes a workstation body, a barrier base, and a monitoring assembly. The barrier base is disposed in the workstation body to divide the workstation body into a traveling area and an operation area, the barrier base is provided with an operation window, and the operation window is located above a tote on a logistics transporting device. The monitoring assembly includes a first detectorand a controller, the first detector is disposed on a detection section in the traveling area, and the detection section corresponds to the operation window. The first detector is configured to detect identity information of the logistics transporting device entering the detection section, and the controller is configured to control the logistics transporting device to brake when a speed of the logistics transporting device entering the detection section is greater than or equal to a first preset speed. When the logistics transporting device exceeds a speed limit in the detection section, the controller may control the logistics transporting device to brake, and a height of the operation window is used for blocking, thereby ensuring safety of the workstation.

## Description

### CROSS-REFERENCES

This application claims priority to Chinese Patent Application No. 202421954708.6, filed with the China National Intellectual Property Administration on August 12, 2024 and entitled "WORKSTATION AND WAREHOUSING SYSTEM", which is incorporated herein by reference in its entirety.

### TECHNICAL FIELD

The present disclosure relates to the field of warehousing and logistics technologies, and in particular, to a workstation and a warehousing system.

### BACKGROUND OF THE INVENTION

A workstation requires contact and interaction between an operator and a logistics transporting device, and therefore, personal safety of the operator during the interaction needs to be ensured.

Currently, a physical barrier is disposed between the operator and the logistics transporting device to provide safety protection for the operator, and the physical barrier is provided with an operation window. When the logistics transporting device travels to the operation window, the operator interacts with the logistics transporting device to pick goods from the logistics transporting device or place goods into the logistics transporting device.

However, the conventional logistics transporting device is prone to losing control and colliding with the physical barrier during operation, resulting in low safety of the workstation.

### BRIEF SUMMARY OF THE INVENTION

The present disclosure provides a workstation and a warehousing system, to address an issue of a logistics transporting device being prone to losing control and colliding with a physical barrier during operation.

According to a first aspect, the present disclosure provides a workstation, including a workstation body, a barrier base, and a monitoring assembly. The barrier base is disposed in the workstation body to divide the workstation body into a traveling area and an operation area. The traveling area is configured for traveling of a logistics transporting device, the operation area is configured to accommodate an operator. The barrier base is provided with an operation window, and the operation window is located above a tote on the logistics transporting device to allow the operator to pick goods from or place goods into the tote through the operation window;
the monitoring assembly includes a first detector and a controller, the first detector is disposed on a detection section in the traveling area, the detection section corresponds to the operation window, the first detector is in communication connection with the controller, and the controller is configured to be in communication connection with the logistics transporting device; and
the first detector is configured to detect identity information of the logistics transporting device entering the detection section, and the controller is configured to control the logistics transporting device to brake when a speed of the logistics transporting device entering the detection section is greater than or equal to a first preset speed.

In a possible implementation, according to the workstation provided in the present disclosure, the barrier base includes a guiding section, and the guiding section is configured to guide the logistics transporting device toward the operation window.

In a possible implementation, according to the workstation provided in the present disclosure, the guiding section includes an arc segment and a first barrier segment connected to the arc segment, at least part of the operation window is located on the arc segment, and the first barrier segment and the arc segment are configured to sequentially guide the logistics transporting device toward the operation window.

In a possible implementation, according to the workstation provided in the present disclosure, a center of the arc segment is in the traveling area.

In a possible implementation, the workstation provided in the present disclosure further includes a blocker, where the blocker is disposed on a side of the barrier base facing the traveling area.

In a possible implementation, according to the workstation provided in the present disclosure, the blocker is disposed at a bottom of the barrier base.

In a possible implementation, according to the workstation provided in the present disclosure, the blocker includes a first blocker segment and a second blocker segment connected sequentially, and the first blocker segment and the second blocker segment are correspondingly disposed with respect to the barrier base.

In a possible implementation, the workstation provided in the present disclosure further includes at least one buffer, where the buffer is disposed on a side of the blocker away from the barrier base.

In a possible implementation, according to the workstation provided in the present disclosure, the barrier base further includes a second barrier segment, the second barrier segment is connected to the arc segment, and the arc segment is located between the first barrier segment and the second barrier segment; and
part of the operation window is located on the second barrier segment.

In a possible implementation, according to the workstation provided in the present disclosure, the second barrier segment is parallel to the first barrier segment.

In a possible implementation, according to the workstation provided in the present disclosure, the first detector is a visual camera, a two-dimensional code camera, or a radio frequency identification device.

According to a second aspect, the present disclosure provides a warehousing system, including the workstation according to any one of the foregoing and at least one logistics transporting device located within the workstation.

In a possible implementation, the warehousing system provided in the present disclosure further includes a dispatching system, where the dispatching system is configured to be in communication connection with the logistics transporting device, to control the logistics transporting device to decelerate when a speed of the logistics transporting device approaching the workstation and located outside a detection section of the workstation is greater than a second preset speed, where the second preset speed is greater than a first preset speed.

In a possible implementation, the warehousing system provided in the present disclosure further includes a second detector, where the second detector is disposed on the logistics transporting device to detect a speed of the logistics transporting device, and the second detector is in communication connection with a monitoring assembly of the workstation.

In a possible implementation, the warehousing system provided in the present disclosure further includes a contact edge assembly, where the contact edge assembly is disposed on the logistics transporting device, and a monitoring assembly of the workstation controls the logistics transporting device to brake when the contact edge assembly comes into contact with a barrier base of the workstation.

In a possible implementation, according to the warehousing system provided in the present disclosure, the contact edge assembly includes a contact edge member and at least one third detector, the contact edge member is disposed on the logistics transporting device, the third detector is disposed on the contact edge member, the third detector is in communication connection with the monitoring assembly on the workstation, and the monitoring assembly controls the logistics transporting device to brake when the third detector comes into contact with a barrier base.

In a possible implementation, according to the warehousing system provided in the present disclosure, the logistics transporting device includes a mobile chassis and a connection assembly disposed on the mobile chassis, the contact edge member is disposed on the mobile chassis, and the connection assembly is configured to connect with a tote, so that a projection of the tote toward the mobile chassis is located on a side of the contact edge member facing the mobile chassis.

In a possible implementation, according to the warehousing system provided in the present disclosure, the contact edge member is located at a bottom of an outer peripheral surface of the mobile chassis.

The present disclosure provides a workstation and a warehousing system. The workstation is provided with a barrier base and a monitoring assembly. During movement of a logistics transporting device, when the logistics transporting device approaches the barrier base and an operation window in a detection section, a controller of the monitoring assembly supervises the logistics transporting device. If the logistics transporting device loses control or exceeds a speed limit, the controller of the monitoring assembly can independently control the logistics transporting device to brake, thereby improving stability of controlling the logistics transporting device, to prevent the logistics transporting device from losing control and colliding with the barrier base. In this way, through configuration of the monitoring assembly, dual protection is established by the controller of the monitoring assembly and a dispatching system in the warehousing system. The barrier base is provided with the operation window. In addition, the operation window is located above a tote of the logistics transporting device. In this way, whether the logistics transporting device moves to the operation window at a normal speed or an excessive speed, a height of the operation window can be set to block the logistics transporting device. This prevents an operator from being injured by the logistics transporting device, and does not affect picking of goods from or placement of goods into the tote on the logistics transporting device by the operator through the operation window.

### BRIEF DESCRIPTION OF DRAWINGS

To describe technical solutions in embodiments of the present disclosure or in the prior art more clearly, the accompanying drawings required for describing the embodiments or the prior art are briefly described below. Clearly, the accompanying drawings in the following descriptions show some embodiments of the present disclosure, and a person of ordinary skill in the art may further derive other drawings from these accompanying drawings without creative efforts.
FIG. 1 is a schematic structural diagram of a warehousing system according to an embodiment of the present disclosure;
FIG. 2 is a schematic structural diagram of the warehousing system in FIG. 1 from another perspective;
FIG. 3 is a schematic structural diagram of the warehousing system in FIG. 1 from still another perspective;
FIG. 4 is a schematic structural diagram of the warehousing system in FIG. 1 from yet another perspective; and
FIG. 5 is a schematic structural diagram of a logistics transporting device in FIG. 1.

Descriptions of reference numerals:
100 - barrier base; 101 - traveling area; 1011 - detection section; 102 - operation area; 110 - operation window; 111 - lower edge; 120 - guiding section; 121 - first barrier segment; 122 - arc segment; 130 - second barrier segment;
200 - blocker; 210 - first blocker segment; 220 -second blocker segment;
300 - first detector;
400 - contact edge assembly; 410 - contact edge member; 420 - third detector;
500 - logistics transporting device; 510 - tote; 520 - mobile chassis;
600 - operator.

### DETAILED DESCRIPTION

To make objectives, technical solutions, and advantages of the present disclosure clearer, the following describes the technical solutions in embodiments of the present disclosure in more detail with reference to accompanying drawings in preferred embodiments of the present disclosure. In the accompanying drawings, same or similar reference numerals throughout the accompanying drawings indicate same or similar components, or components having same or similar functions. The described embodiments are merely some but not all of the embodiments of the present disclosure. The embodiments described below with reference to the accompanying drawings are exemplary and are intended to explain the present disclosure and cannot be construed as a limitation to the present disclosure. All other embodiments obtained by a person of ordinary skill in the art based on the embodiments of the present disclosure without any creative effort shall fall within the scope of protection of the present disclosure. The embodiments of the present disclosure are described below in detail with reference to the accompanying drawings.

In the descriptions of the present disclosure, it should be noted that, unless explicitly specified and limited otherwise, the terms "mounting", "interconnection", and "connection" should be understood in a broad sense and may be used interchangeably. For example, the "connection" may be a direct connection, or may be an indirect connection through an intermediate medium; and may be a fixed connection, or may be a sliding connection. A person of ordinary skill in the art may understand specific meanings of the terms in the present disclosure according to specific situations.

In the descriptions of the present disclosure, it should be understood that orientations or position relationships indicated by the terms such as "above", "below", "front", "rear", "vertical", "horizontal", "top", "bottom", "inside", and "outside" are based on orientations or position relationships shown in the accompanying drawings, and are only for convenience of describing the present disclosure and simplifying the descriptions, instead of indicating or implying that the mentioned apparatus or element needs to have a specific orientation or needs to be constructed and operated in a specific orientation. Therefore, this should not be understood as a limitation on the present disclosure.

The terms "first", "second", and "third" in the specification, the claims, and the foregoing accompanying drawings of the present disclosure are intended to distinguish between similar objects, rather than describe a specific sequence or order. It should be understood that such used data is interchangeable where appropriate, so that the embodiments of the present disclosure described herein can be implemented in an order other than those illustrated or described herein.

In addition, the terms "include" and "have" and any other variants are intended to cover a non-exclusive inclusion. For example, a process, method, system, product, or display that includes a list of steps or modules is not necessarily limited to those expressly listed steps or modules, but may include other steps or modules not expressly listed or inherent to the process, method, product, or display.

Currently, a physical barrier is disposed between an operator and a logistics transporting device to provide safety protection for the operator, and the physical barrier is provided with an operation window. When the logistics transporting device travels to the operation window, the operator interacts with the logistics transporting device to pick goods from the logistics transporting device or place goods into the logistics transporting device.

However, the conventional logistics transporting device is prone to losing control and colliding with the physical barrier during operation, resulting in low safety of a workstation.

To overcome the deficiencies in the prior art, the present disclosure provides a workstation and a warehousing system. The workstation is provided with a barrier base and a monitoring assembly. During movement of a logistics transporting device, when the logistics transporting device located in a detection section approaches the barrier base and an operation window, a controller of the monitoring assembly supervises the logistics transporting device. If the logistics transporting device loses control or exceeds a speed limit, the controller of the monitoring assembly can independently control the logistics transporting device to brake, thereby improving stability of controlling the logistics transporting device, to prevent the logistics transporting device from losing control and colliding with the barrier base. In this way, through configuration of the monitoring assembly, dual protection is established by the controller of the monitoring assembly and a dispatching system in the warehousing system. The barrier base is provided with the operation window. In addition, the operation window is located above a tote of the logistics transporting device. In this way, whether the logistics transporting device moves to the operation window at a normal speed or an excessive speed, a height of the operation window can be set to block the logistics transporting device. This prevents an operator from being injured by the logistics transporting device, and does not affect picking of goods from or placement of goods into the tote on the logistics transporting device by the operator through the operation window.

The following describes the content of the present disclosure in detail with reference to the accompanying drawings, so that a person skilled in the art can understand the content of the present disclosure more clearly and thoroughly.

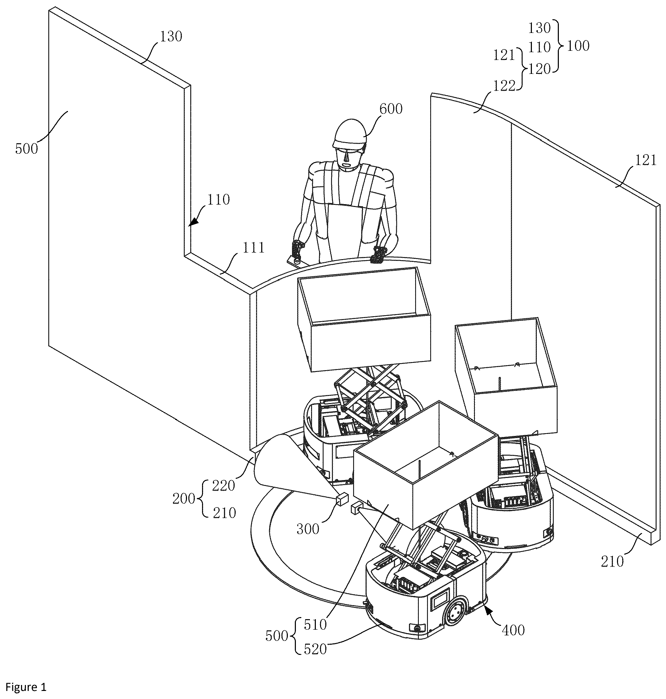

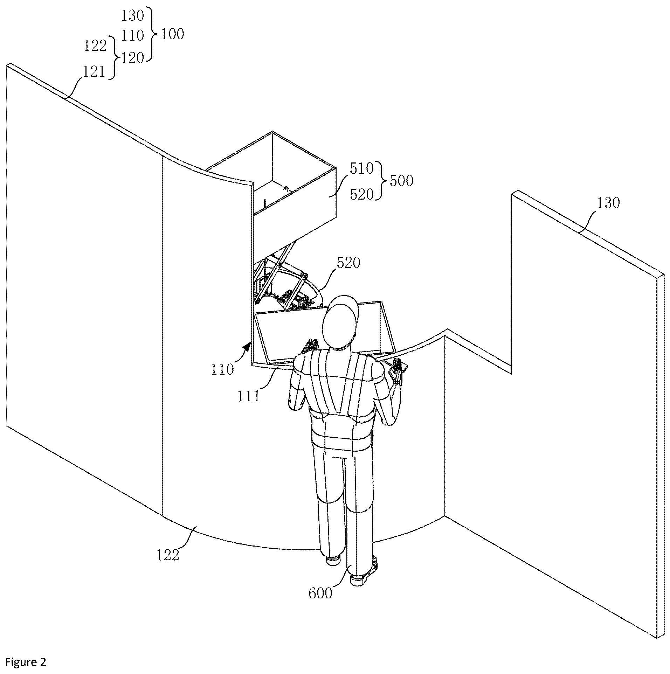

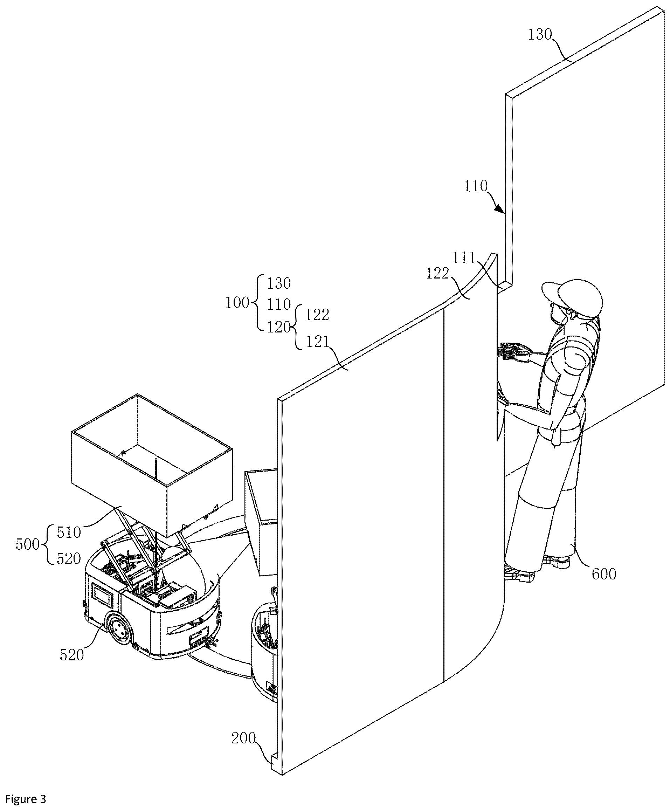

Referring to FIG. 1 to FIG. 4, an embodiment of the present disclosure provides a workstation, including a workstation body, a barrier base 100, and a monitoring assembly. The barrier base 100 is disposed in the workstation body to divide the workstation body into a traveling area 101 and an operation area 102. The traveling area 101 is configured for traveling of a logistics transporting device 500, the operation area 102 is configured to accommodate an operator 600. The barrier base 100 is provided with an operation window 110, and the operation window 110 is located above a tote 510 on the logistics transporting device 500 to allow the operator 600 to pick goods from or place goods into the tote 510 through the operation window 110.

The monitoring assembly includes a first detector 300 and a controller, the first detector 300 is disposed on a detection section 1011 in the traveling area 101. The detection section 1011 corresponds to the operation window 110. The first detector 300 is in communication connection with the controller, and the controller is configured to be in communication connection with the logistics transporting device 500.

The first detector 300 is configured to detect identity information of the logistics transporting device 500 entering the detection section 1011, and the controller is configured to control the logistics transporting device 500 to brake when a speed of the logistics transporting device 500 entering the detection section 1011 is greater than or equal to a first preset speed.

The barrier base 100 is disposed in the workstation body to divide the workstation body into the traveling area 101 and the operation area 102. The traveling area 101 may be configured for the traveling of the logistics transporting device 500, so that the logistics transporting device 500 can transport the tote 510 in the traveling area 101. The operation area 102 may be configured for operation of the operator 600.

The barrier base 100 is provided with the operation window 110. When the logistics transporting device 500 moves to the operation window 110, the operator 600 may retrieve the tote 510 from or put the tote 510 into the logistics transporting device 500 through the operation window 110 without entering the traveling area 101. The operation window 110 is higher than the tote 510 on the logistics transporting device 500. For example, a lower edge 111 of the operation window 110 is set to be around one-meter high, which is usually below an armpit of the operator 600. Therefore, when the operator 600 picks goods from or places goods into the tote 510, the operator 600 can only touch the tote 510, but cannot easily touch the logistics transporting device 500 due to a height limitation of the operation window 110, to further avoid contact between the operator 600 and the logistics transporting device 500, thereby ensuring safety of the operator 600. To further ensure the safety of the operator 600, a sharp structure may be avoided on all parts of the logistics transporting device 500 that the operator 600 can touch. In this way, even if the logistics transporting device 500 collides with the barrier base 100 or the operator 600, it is difficult to cause substantial harm to the operator 600.

The monitoring assembly includes the first detector 300 and the controller. The controller is in communication connection with the logistics transporting device 500. The first detector 300 is disposed in the detection section 1011 of the traveling area 101 corresponding to the operation window 110, so that the monitoring assembly can use the first detector 300 to determine identity information of each logistics transporting device 500 currently in the detection section 1011, and feed back the detected identity information of the logistics transporting device 500 in the detection section 1011 to the controller, and the controller can be in communication connection with the logistics transporting device 500 having the corresponding identity information and monitor a movement speed of the logistics transporting device 500 in real time. When a movement speed of a logistics transporting device 500 in the detection section 1011 exceeds the first preset speed, the controller may control the corresponding logistics transporting device 500 exceeding a speed limit to brake based on obtained identity information, to quickly reduce the speed of the logistics transporting device 500 by controlling the logistics transporting device 500 to brake, so that the logistics transporting device 500 can maintain a suitable speed after restarting movement, thereby reducing a possibility of exceeding the speed limit or losing control of the logistics transporting device 500, and a colliding between the barriers and the logistics transporting device 500. Even if the logistics transporting device 500 exceeds the speed limit and loses control, and collides with the barrier base 100, because the operation window 110 is higher than the tote 510 on the logistics transporting device 500, the logistics transporting device 500 does not collide with the operator 600, thereby ensuring the safety.

Therefore, the workstation provided in this embodiment of the present disclosure is provided with the barrier base 100 and the monitoring assembly. During movement of the logistics transporting device 500, when the logistics transporting device 500 approaches the barrier base 100 and the operation window 110 in the detection section 1011, the controller of the monitoring assembly supervises the logistics transporting device 500. If the logistics transporting device 500 loses control or exceeds the speed limit, the controller of the monitoring assembly can independently control the logistics transporting device 500 to brake, thereby improving stability of controlling the logistics transporting device 500, to prevent the logistics transporting device 500 from losing control and colliding with the barrier base. In this way, through configuration of the monitoring assembly, dual protection is established by the controller of the monitoring assembly and a dispatching system in the warehousing system. The barrier base is provided with the operation window. In addition, the operation window is located above the tote of the logistics transporting device 500. In this way, whether the logistics transporting device 500 moves to the operation window at a normal speed or an excessive speed, a height of the operation window can be set to block the logistics transporting device 500. This prevents the operator from being injured by the logistics transporting device 500, and does not affect picking of goods from or placement of goods into the tote on the logistics transporting device 500 by the operator through the operation window.

In some embodiments, referring to FIG. 1 to FIG. 4, the barrier base 100 includes a guiding section 120, and the guiding section 120 is configured to guide the logistics transporting device 500 toward the operation window 110.

It may be understood that, through configuration of the guiding section 120, a guiding function can be achieved when the logistics transporting device 500 moves toward the operation window 110, enabling the logistics transporting device 500 to stably move toward the operation window 110. This prevents the logistics transporting device 500 from deviating from a movement path and moving away from the operation window 110, which would make it difficult for the operator 600 to pick goods from or place goods into the tote 510 on the logistics transporting device 500 through the operation window 110.

During specific implementation, referring to FIG. 1 to FIG. 4, the guiding section 120 includes an arc segment 122 and a first barrier segment 121 connected to the arc segment 122. At least part of the operation window 110 is located on the arc segment 122. The first barrier segment 121 and the arc segment 122 are configured to sequentially guide the logistics transporting device 500 toward the operation window 110.

It may be understood that the first barrier segment 121 is located on one side of the arc segment 122 and extends away from the first barrier segment 121, to divide the workstation body into the traveling area 101 and the operation area 102.

The arc segment 122 is connected to the first barrier segment 121, and one edge of the arc segment 122 is in smooth transition with an edge of the first barrier segment 121. In this way, when the logistics transporting device 500 moves to and comes into contact with the first barrier segment 121, the first barrier segment 121 can stably guide the logistics transporting device 500 to the arc segment 122 without blocking the movement of the logistics transporting device 500 due to a structure such as a stepped surface between the first barrier segment 121 and the arc segment 122.

The at least part of the operation window 110 is disposed on the arc segment 122. After moving to the arc segment 122, the logistics transporting device 500 may move to the operation window 110 under guidance of the arc segment 122, allowing the operator 600 to pick goods from or place goods into the tote 510 on the logistics transporting device 500 through the operation window 110.

Through configuration of the at least part of the operation window 110 on the arc segment 122, the operation window 110 may have an arc structure, so that the operation window 110 correspondingly forms an arc operable range and there is a larger operation space, thereby facilitating picking of goods from or placement of goods into the tote 510 by the operator 600.

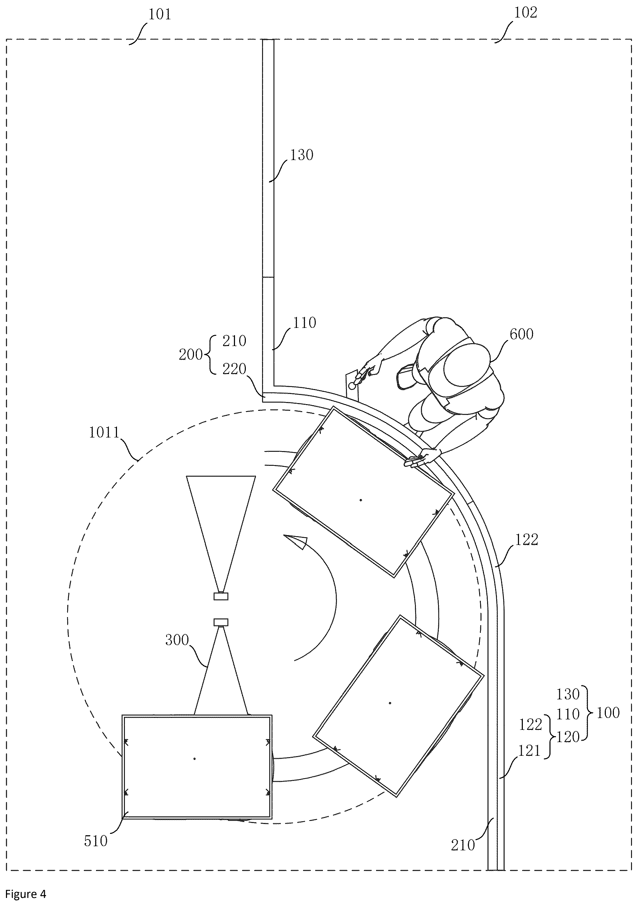

Moreover, referring to FIG. 4, a center of the arc segment 122 is in the traveling area 101. The center of the arc segment 122 is configured to be in the traveling area 101, that is, the arc segment 122 is configured to be curved toward the traveling area 101. This facilitates the arc segment 122 to continuously guide the logistics transporting device 500 as the logistics transporting device 500 moves along the arc segment 122, and provide centripetal force to the logistics transporting device 500, thereby achieving a more stable and reliable guidance effect for the logistics transporting device 500.

In another embodiment, the center of the arc segment 122 may alternatively be configured in the operation area 102 according to a configuration requirement of the workstation body, which is not limited in the present disclosure.

In some embodiments, referring to FIG. 1 and FIG. 4, the workstation provided in this embodiment of the present disclosure further includes a blocker 200, where the blocker 200 is disposed on a side of the barrier base 100 facing the traveling area 101. In this way, when the logistics transporting device 500 moves along the barrier base 100, the logistics transporting device 500 can contact the blocker 200, thereby preventing impact damage to a structure of the barrier base 100.

The blocker 200 is disposed at a bottom of the barrier base 100. It may be understood that, through configuration of the blocker 200 at the bottom of the barrier base 100, when the blocker 200 contacts the logistics transporting device 500, the blocker 200 can contact a bottom of the logistics transporting device 500, thereby lowering a center of gravity of the barrier base 100, and improving the stability. Even if the logistics transporting device 500 collides with the blocker 200, a possibility of damage to the barrier base 100 or toppling of the barrier base 100 is reduced.

During specific implementation, referring to FIG. 1 and FIG. 4, the blocker 200 includes a first blocker segment 210 and a second blocker segment 220 connected sequentially, and the first blocker segment 210 and the second blocker segment 220 are correspondingly disposed with respect to the barrier base 100.

The first blocker segment 210 is correspondingly disposed with respect to the first barrier segment 121 of the barrier base 100. The second blocker segment 220 is correspondingly disposed with respect to the arc segment 122 of the barrier base 100. In addition, the first blocker segment 210 and the second blocker segment 220 are connected to each other, forming a continuous blocking structure that provides sustained blocking and guiding effects for the logistics transporting device 500.

Moreover, the workstation provided in this embodiment of the present disclosure further includes at least one buffer, where the buffer is disposed on a side of the blocker 200 away from the barrier base 100. Through configuration of the buffer on the side of the blocker 200 away from the barrier base 100, when the logistics transporting device 500 contacts the blocker 200, the logistics transporting device 500 first comes into contact with the buffer, so that the buffer reduces a collision speed of the logistics transporting device 500, and mitigates impact force, thereby ensuring the structural safety of the logistics transporting device 500 and ensuring the structural stability of the barrier base 100.

For example, the buffer may be a rubber block, spring block, sponge pad, foam pad, or the like disposed on the side of the blocker 200 away from the barrier base 100.

In some embodiments, referring to FIG. 1 to FIG. 4, the barrier base 100 further includes a second barrier segment 130, the second barrier segment 130 is connected to the arc segment 122, and the arc segment 122 is located between the first barrier segment 121 and the second barrier segment 130. Part of the operation window 110 is located on the second barrier segment 130.

It may be understood that, through configuration of the second barrier segment 130 on a side of the arc segment 122 away from the first barrier segment 121, the second barrier segment 130 extends toward the another side of the arc segment 122 to further divide the workstation body into the traveling area 101 and the operation area 102. This makes a boundary between the traveling area 101 and operation area 102 more distinct, simplifies zoning of the workstation body, and facilitates orderly operation of the tote 510.

Through configuration of the part of the operation window 110 on the second barrier segment 130, a range of the operation window 110 can be further expanded to increase the operation space for the operator 600.

Moreover, the second blocker segment 220 may be further extended to correspond with the second barrier segment 130, thereby increasing a blocking range of the blocker 200 and ensuring a stable and reliable blocking effect of the blocker 200 on the barrier base 100.

Specifically, the second barrier segment 130 is parallel to the first barrier segment 121. It may be understood that the second barrier segment 130 is configured to be parallel to the first barrier segment 121, to facilitate adjustment of an area ratio between the traveling area 101 and the operation area 102, thereby simplifying configuration of the barrier base 100.

Certainly, in another embodiment, an angle may be set between the second barrier segment 130 and the first barrier segment 121. Specifically, an angle value may be set based on a specific zoning requirement of the workstation body, which is not limited in the present disclosure.

The first detector 300 may be a visual camera, a two-dimensional code camera, or a radio frequency identification device. The first preset speed and a second preset speed may be speed thresholds set based on experience of personnel in the art. For example, the first preset speed may be 10 m/s, and the second preset speed may be 15 m/s, etc., which is not specifically limited in the present disclosure.

It may be understood that, through configuration of the first detector 300 as the visual camera, the two-dimensional code camera, the radio frequency identification device, or the like, accuracy of identifying the logistics transporting device 500 is high, and response for the identification is rapid. Correspondingly, an identity chip or an identity card may be configured on the logistics transporting device 500, to facilitate identification by the first detector 300.

An embodiment of the present disclosure further provides a warehousing system, referring to FIG. 1 to FIG. 5, including the workstation in any one of the foregoing embodiments and at least one logistics transporting device 500 located within the workstation.

The workstation is described in detail in the foregoing embodiment, and details are not described herein again.

In some embodiments, referring to FIG. 1 and FIG. 4, the warehousing system further includes a dispatching system. The dispatching system is configured to be in communication connection with the logistics transporting device 500 to control the logistics transporting device 500 to decelerate when a speed of the logistics transporting device 500 approaching the workstation and located outside a detection section 1011 of the workstation is greater than a second preset speed. The second preset speed is greater than a first preset speed.

It may be understood that a first detector 300 may identify identity information of the logistics transporting device 500 located within the detection section 1011. Correspondingly, the dispatching system is configured to be in communication connection with the logistics transporting device 500, and determine a position of each logistics transporting device 500, to preliminarily control the speed of the logistics transporting device 500 when the logistics transporting device 500 approaches the workstation but has not yet entered the detection section 1011, thereby further improving reliability of controlling the speed of the logistics transporting device 500 by the warehousing system and providing stable protection.

When a speed of the logistics transporting device 500 located near the workstation body, destined for the workstation body, and has not yet reached the detection section 1011 is greater than the second preset speed, the dispatching system may control the logistics transporting device 500 to decelerate and enter the detection section 1011 at a lower speed. After the logistics transporting device 500 enters the detection section 1011, the controller and the dispatching system simultaneously supervise the logistics transporting device 500. In this case, the speed of the logistics transporting device 500 is lower than or equal to the second preset speed. If the speed of the logistics transporting device 500 is greater than the first preset speed, the controller controls the logistics transporting device 500 to brake, thereby reducing the speed of the logistics transporting device 500 below the first preset speed and enabling the logistics transporting device 500 to move smoothly to an operation window 110 at a movement speed lower than the first preset speed.

The warehousing system provided in this embodiment of the present disclosure is provided with the workstation. The workstation is provided with a barrier base 100 and a monitoring assembly. During movement of the logistics transporting device 500, when the logistics transporting device 500 approaches the barrier base 100 and the operation window 110 in the detection section 1011, the controller of the monitoring assembly supervises the logistics transporting device 500. If the logistics transporting device 500 loses control or exceeds a speed limit, the controller of the monitoring assembly can independently control the logistics transporting device 500 to brake, thereby improving stability of controlling the logistics transporting device 500, to prevent the logistics transporting device 500 from losing control and colliding with the barrier base 100. In this way, through configuration of the monitoring assembly, dual protection is established by the controller of the monitoring assembly and the dispatching system in the warehousing system. The operation window 110 on the barrier base 100 is located above a tote 510 of the logistics transporting device 500. In this way, whether the logistics transporting device 500 moves to the operation window 110 at a normal speed or an excessive speed, a height of the operation window 110 can be set to block the logistics transporting device 500. This prevents an operator from being injured by the logistics transporting device 500, and does not affect picking of goods from or placement of goods into the tote on the logistics transporting device 500 by the operator through the operation window.

In some embodiments, the warehousing system provided in the present disclosure further includes a second detector, where the second detector is disposed on the logistics transporting device 500 to detect the speed of the logistics transporting device 500. The second detector is in communication connection with the controller of the monitoring assembly in the workstation.

Through configuration of the second detector on the logistics transporting device 500, the second detector can be used to detect the movement speed of the logistics transporting device 500. The second detector detects the movement speed of the logistics transporting device 500 in real time and feeds back a detected movement speed signal to the controller of the monitoring assembly and the dispatching system, so that the controller controls the logistics transporting device 500 to brake when the speed of the logistics transporting device 500 in the detection section 1011 is greater than the first preset speed, or the dispatching system controls the logistics transporting device 500 to decelerate when the speed of the logistics transporting device 500 outside the detection section 1011 is greater than the second preset speed.

Specifically, the second detector may be a dual encoder disposed at a motor of the logistics transporting device 500, and determines the movement speed of the logistics transporting device 500 by detecting a rotational speed of the motor.

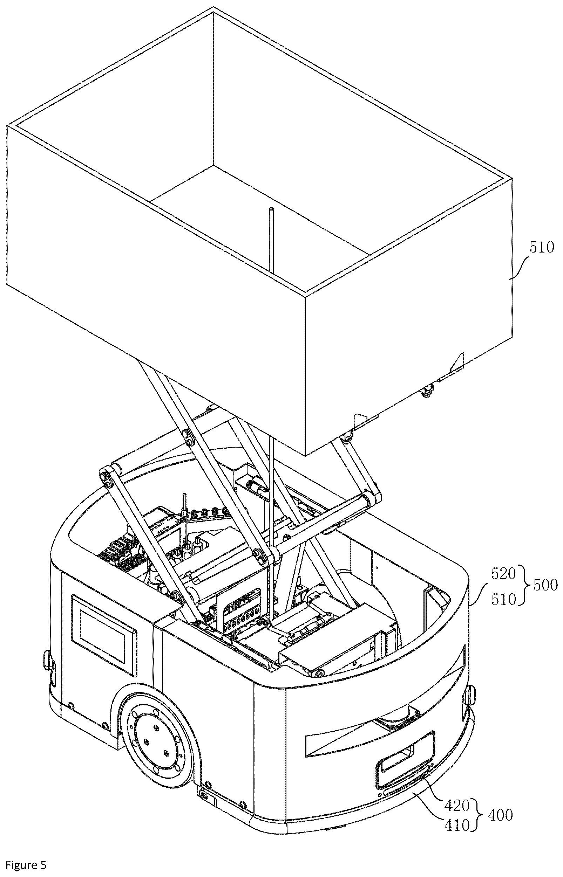

In some embodiments, as shown in FIG. 1 and FIG. 5, the warehousing system provided in this embodiment of the present disclosure further includes a contact edge assembly 400. The contact edge assembly 400 is disposed on the logistics transporting device 500. When the contact edge assembly 400 contacts the barrier base 100 of the workstation, the controller in the monitoring assembly of the workstation controls the logistics transporting device 500 to brake. It may be understood that, through configuration of the contact edge assembly 400 on the logistics transporting device 500, when the contact edge assembly 400 contacts a blocker 200 of the barrier base 100, the controller controls the logistics transporting device 500 to brake, thereby avoiding continuous friction between the logistics transporting device 500 and the blocker 200 and reducing a possibility of damage to the logistics transporting device 500.

During specific implementation, referring to FIG. 1 and FIG. 5, the contact edge assembly 400 includes a contact edge member 410 and at least one third detector 420. The contact edge member 410 is disposed on the logistics transporting device 500. The third detector 420 is disposed on the contact edge member 410. The third detector 420 is in communication connection with the controller of the monitoring assembly. When the third detector 420 contacts the barrier base 100, the controller controls the logistics transporting device 500 to brake.

The contact edge member 410 is disposed on the logistics transporting device 500, so that the logistics transporting device 500 contacts the blocker 200 through the contact edge member 410, thereby preventing the logistics transporting device 500 from directly colliding with the blocker 200, and ensuring structural stability of the logistics transporting device 500.

The third detector 420 is disposed on the contact edge member 410, to notify the controller when detecting that the contact edge member 410 contacts the blocker 200, so that the controller controls the logistics transporting device 500 to brake. The contact edge member 410 may be configured as an elastic bumper. The third detector 420 may be a pressure sensor or a deformation sensor. When the third detector 420 detects an increase in pressure on the elastic bumper or detects local deformation of the elastic bumper, it may be determined that the contact edge member 410 has contacted the blocker 200.

In addition, referring to FIG. 5, the logistics transporting device 500 includes a mobile chassis 520 and a connection assembly disposed on the mobile chassis 520. The connection assembly may connect with the tote 510. The contact edge member 410 is disposed on the mobile chassis 520. A projection of the tote 510 toward the mobile chassis 520 is located on a side of the contact edge member 410 facing the mobile chassis 520.

It may be understood that the contact edge member 410 is configured on a side of the mobile chassis 520 facing an advancing direction of the logistics transporting device 500, and the projection of the tote 510 toward the mobile chassis 520 is located on the side of the contact edge member 410 away from the advancing direction of the logistics transporting device 500. In this way, when the contact edge member 410 contacts the blocker 200, it can be ensured that the tote 510 on the logistics transporting device 500 does not contact the barrier base 100, thereby ensuring that the tote 510 of the logistics transporting device 500 does not fall or shift due to collision.

Moreover, the contact edge member 410 is located at a bottom of an outer peripheral surface of the mobile chassis 520. The contact edge member 410 is disposed at the bottom of the mobile chassis 520, so that the contact edge member 410 can hit and contact the blocker 200 more precisely, thereby ensuring accuracy and stability of the contact between the contact edge member 410 and the blocker 200.

Finally, it should be noted that the foregoing embodiments are merely used for describing the technical solutions of the present disclosure, but are not intended to limit the present disclosure. Although the present disclosure is described in detail with reference to the foregoing embodiments, it should be appreciated by a person skilled in the art that modifications may still be made to the technical solutions recorded in the foregoing embodiments, or equivalent replacements may be made to a part or all of the technical features; and these modifications or replacements do not cause the essence of corresponding technical solutions to depart from the scope of the technical solutions in the embodiments of the present disclosure.

## Claims

1. A workstation, comprising a workstation body, a barrier base, and a monitoring assembly;
wherein the barrier base is disposed in the workstation body to divide the workstation body into a traveling area and an operation area, the traveling area being configured for traveling of a logistics transporting device, the operation area being configured to accommodate an operator;
wherein the barrier base is provided with an operation window, and the operation window being located above a tote on the logistics transporting device to allow the operator to pick goods from or place goods into the tote through the operation window;
wherein the monitoring assembly comprises a first detector and a controller, the first detector being disposed on a detection section in the traveling area, the detection section corresponding to the operation window, the first detector being in communication connection with the controller, and the controller being configured to be in communication connection with the logistics transporting device; and
wherein the first detector is configured to detect identity information of the logistics transporting device entering the detection section, and the controller is configured to control the logistics transporting device to brake when a speed of the logistics transporting device entering the detection section is greater than or equal to a first preset speed.

2. The workstation according to claim 1, wherein the barrier base comprises a guiding section, and the guiding section is configured to guide the logistics transporting device toward the operation window.

3. The workstation according to claim 2, wherein the guiding section comprises an arc segment and a first barrier segment connected to the arc segment, at least part of the operation window is located on the arc segment, and the first barrier segment and the arc segment are configured to sequentially guide the logistics transporting device toward the operation window.

4. The workstation according to claim 3, wherein a center of the arc segment is in the traveling area.

5. The workstation according to claim 1, further comprising a blocker, wherein the blocker is disposed on a side of the barrier base facing the traveling area.

6. The workstation according to claim 5, wherein the blocker is disposed at a bottom of the barrier base.

7. The workstation according to claim 6, wherein the blocker comprises a first blocker segment and a second blocker segment connected sequentially, and the first blocker segment and the second blocker segment are correspondingly disposed with respect to the barrier base.

8. The workstation according to claim 5 to 7, further comprising at least one buffer, wherein the buffer is disposed on a side of the blocker away from the barrier base.

9. The workstation according to claim 3 or 4, wherein the barrier base further comprises a second barrier segment, the second barrier segment is connected to the arc segment, and the arc segment is located between the first barrier segment and the second barrier segment; and
part of the operation window is located on the second barrier segment.

10. The workstation according to claim 9, wherein the second barrier segment is parallel to the first barrier segment.

11. The workstation according to any one of claims 1 to 7, wherein the first detector is a visual camera, a two-dimensional code camera, or a radio frequency identification device.

12. A warehousing system, comprising the workstation according to any one of claims 1 to 11 and at least one logistics transporting device located within the workstation.

13. The warehousing system according to claim 12, further comprising a dispatching system,
wherein the dispatching system is configured to be in communication connection with the logistics transporting device, to control the logistics transporting device to decelerate when a speed of the logistics transporting device approaching the workstation and located outside a detection section of the workstation is greater than a second preset speed, wherein the second preset speed is greater than a first preset speed.

14. The warehousing system according to claim 12, further comprising a second detector, wherein the second detector is disposed on the logistics transporting device to detect a speed of the logistics transporting device, and the second detector is in communication connection with a monitoring assembly of the workstation.

15. The warehousing system according to claim 12, further comprising a contact edge assembly,
wherein the contact edge assembly is disposed on the logistics transporting device, and the monitoring assembly of the workstation controls the logistics transporting device to brake when the contact edge assembly comes into contact with the barrier base of the workstation.

16. The warehousing system according to claim 15, wherein the contact edge assembly comprises a contact edge member and at least one third detector, the contact edge member is disposed on the logistics transporting device, the third detector is disposed on the contact edge member, the third detector is in communication connection with the monitoring assembly of the workstation, and the monitoring assembly controls the logistics transporting device to brake when the third detector comes into contact with the barrier base.

17. The warehousing system according to claim 16, wherein the logistics transporting device comprises a mobile chassis and a connection assembly disposed on the mobile chassis, the contact edge member is disposed on the mobile chassis, and the connection assembly is configured to connect with a tote, so that a projection of the tote toward the mobile chassis is located on a side of the contact edge member facing the mobile chassis.

18. The warehousing system according to claim 17, wherein the contact edge member is located at a bottom of an outer peripheral surface of the mobile chassis.
